## Europäisches Patentamt
## European Patent Office
## Office européen des brevets

(19)

(11) Veröffentlichungsnummer: **0 164 481**
**B1**

(12) # EUROPÄISCHE PATENTSCHRIFT

(45) Veröffentlichungstag der Patentschrift:
02.11.88

(51) Int. Cl.⁴: **A 61 C 5/00**

(21) Anmeldenummer: **84810256.2**

(22) Anmeldetag: **25.05.84**

(54) **Magazin mit Retentionsstiften zur Behandlung zerstörter Zähne.**

(43) Veröffentlichungstag der Anmeldung:
**18.12.85 Patentblatt 85/51**

(45) Bekanntmachung des Hinweises auf die Patenterteilung:
**02.11.88 Patentblatt 88/44**

(84) Benannte Vertragsstaaten:
**AT BE CH DE FR GB IT LI LU NL SE**

(56) Entgegenhaltungen:
**CH-A-448 621**
**DE-A-2 316 126**
**GB-A-844 644**
**US-A-4 155 162**

**Brockhaus-Wahrig, Deutsches Wörterbuch, Band G-Jz, Seiten 303, 394**

(73) Patentinhaber: **Nordin, Harald E., Villa Amphion, CH- 1822 Chernex (CH)**

(72) Erfinder: **Nordin, Harald E., Villa Amphion, CH-1822 Chernex (CH)**

(74) Vertreter: **Seehof, Michel, c/o AMMANN INGENIEURS- CONSEILS EN PROPRIETE INTELLECTUELLE SA BERNE Schwarztorstrasse 31, CH- 3001 Berne (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Gerät mit einem Retentionsstifte enthaltenden Magazin zur Behandlung zerstörter Zahne, wobei die Stifte über eine als Einschnürung ausgebildete Sollbruchstelle miteinander verbunden sind und das Magazin als Handgriff ausgebildet ist, in welchem Vorschubmittel angeordnet sind, um die zu einer Stange zusammengefassten Retentionsstifte zwecks Einkleben in eine Bohrung im Zahn vorwärtszubewegen.

Ein solches Magazin ist aus der US-A-4 155 162 bekannt, das ausgebildet ist, jeweils ein Retentionsstift-Stück aufzunehmen, das aus wenigen, in den Zahn einzuführenden Verankerungsteilen und einem Handhabungsteil besteht, wobei die Teile über eine Sollbruchstelle miteinander verbunden sind. Die Verankerungsteile haben ein Gewinde und werden in eine Bohrung im Zahn eingeschraubt. Zu diesem Zwecke weist das Handhabungsteil einen Haken auf, der in einem Schlitz im Magazin läuft, um die Torsionskräfte beim Hineindrehen aufzunehmen. Das Magazin, das mitsamt dem Handhabungsende nach Gebrauch weggeworfen wird, wird mittels eines aufsteckbaren Handgriffes oder Handstückes betätigt, d. h. um seine Achse gedreht.

Obwohl solche Stifte in der Regel nur kleine Dimensionen von beispielsweise 0,8 mm Durchmesser und von ca. 6 - 8 mm Länge aufweisen und demgemäss nicht sehr viel Material darstellen, ist der wegzuwerfende Teil nicht vernachlässigbar, besonders wenn die Stifte aus einem teuren Metall wie Titan bestehen, abgesehen von der teuren Fertigung von verschiedenen Teilen eines Stückes. Der Abfall fällt um so mehr ins Gewicht, als nur wenige Stifte auf einmal verwendet werden können, da sonst Gefahr besteht, dass sie irgendwo an einer Sollbruchstelle brechen, womit das ganze Magazin unbrauchbar wird. Ausserdem kann das relativ grosse und in der Herstellung aufwendige Magazin nicht wiederverwendet werden und ist nur für einschraubbare Stifte geeignet.

Es ist demgegenüber Aufgabe der vorliegenden Erfindung, ein Gerät für einklebbare Retentionsstifte anzugeben, das insgesamt weniger aufwendig ist und keine Wegwerfteile aufweist, sowie handlicher gebaut werden kann. Ausserdem soll bei den Retentionsstiften kein Abfall verursacht werden und eine grossere Anzahl davon verwendet und auf einmal geladen werden können. Diese Aufgabe wird mit einem in den Ansprüchen beschriebenen Gerät und Stifte gelöst.

Die Erfindung wird im folgenden anhand einer Zeichnung eines Ausführungsbeispiels näher erläutert werden.

Figur 1 zeigt eine Anzahl von miteinander verbundenen Retentionsstiften,

Figur 2 zeigt, im vergrösserten Maßstab, einen Schnitt durch einen Retentionsstift,

Figur 3 zeigt im Längsschnitt ein erfindungsgemässes Gerät,

Figur 4 zeigt eine Ausschnittsvergrösserung von Figur 3,

Figur 5 zeigt einen Schnitt durch Figur 4, und

Figur 6 zeigt, im vergrösserten Maßstab, einen Schnitt durch den hinteren Teil von Figur 3.

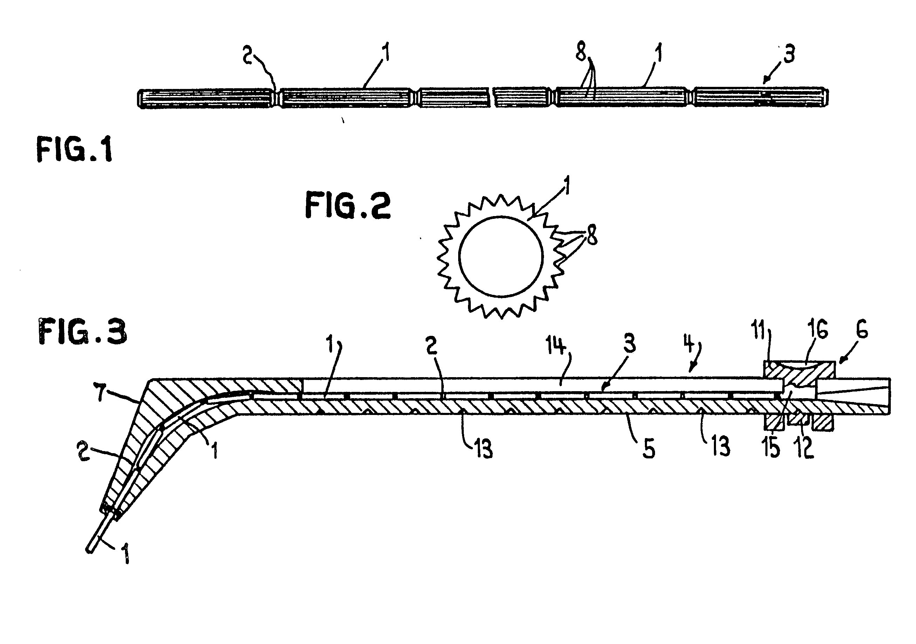

In Figur 1 erkennt man die Retentionsstifte 1, die über eine Sollbruchstelle 2 zu einer Stange 3 zusammengefügt sind, die in das Magazin 4 eingeführt werden kann. Der Retentionsstift 1 weist, im Gegensatz zu den vorbekannten Stiften, eine Längsriffelung 8 auf, die eine bessere Verankerung des Stiftes in der dafür vorgesehenen Bohrung im Zahn gewährleistet.

Das Gerät besteht im wesentlichen aus dem Magazin 4, das als Handgriff 5 ausgebildet ist und Vorschubmittel 6 enthält, und dem Kopf 7. Zwecks besserer Handhabung ist der Kopf bezüglich des Handgriffes unter einem stumpfen Winkel geneigt.

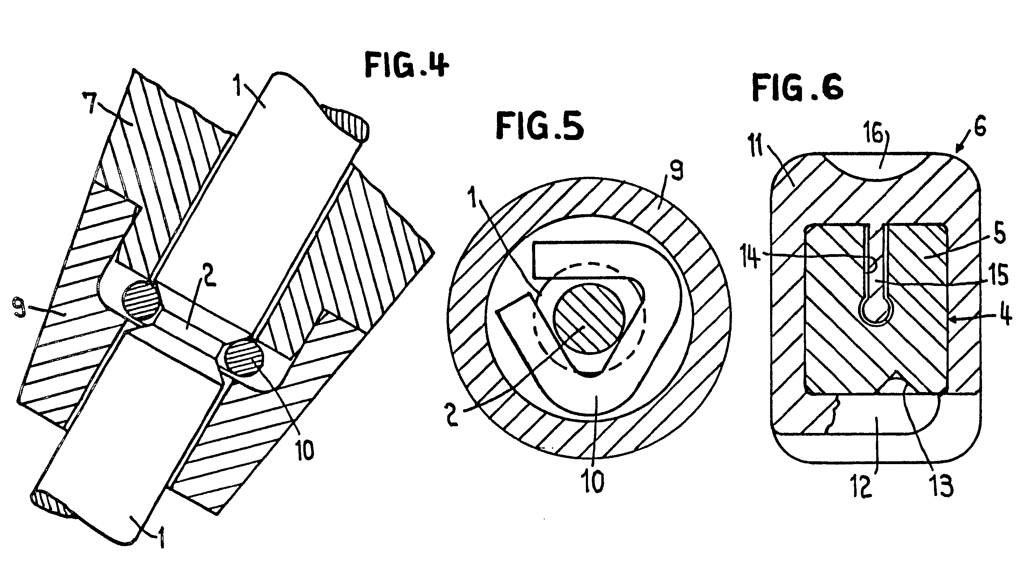

Aus den Figuren 4 und 5 erkennt man den Aufbau des Kopfes. Der Kopf ist zweiteilig gestaltet und die Spitze 9 umfasst eine dreieckig geformte offene Feder 10, in welcher die Sollbruchstelle 2 einrastet. Diese Sollbruchstelle ist als Einschnürung ausgebildet, zu welcher sich die beiden Enden der Retentionsstifte konisch verjüngen. Beim Vorschub der Stange 3 krümmt sich diese an den Sollbruchstellen, wobei sich dabei ein Riss vorbereiten kann, ohne dass die Stange dort ganz durchbricht.

Die Vorschubmittel 6 enthalten einen den Handgriff 5 umfassenden Schieber 11 mit einem Federteil 12, der in Kerben 13 am Unterteil des Handgriffes einrastet. Der Abstand zwischen zwei Kerben entspricht dem Abstand zwischen zwei Sollbruchstellen. Der Handgriff 5 weist einen Schlitz 14 auf, in welchem eine Fahne 15, die einstückig mit dem Schieberkörper 11 hergestellt ist, läuft und die ein verdicktes Ende aufweist und auf das Ende der Stange 3 wirkt. Zwecks besserer Handhabung kann der Schieberkörper eine Einbuchtung 16 aufweisen. Um eine neue Stange 3 zu laden ist es notwendig, den Schieber 6 herauszunehmen.

Das oben beschriebene Magazin stellt ein erstes, einfaches Ausführungsbeispiel dar und es ist möglich, verschiedene Ausführungsvarianten anzufügen. So kann die Spitze des Kopfes statt einer Feder einen Greifmechanismus aufweisen, der ähnlich wie bei einer Anzahl von Bleistiftminenhaltern ausgebildet ist. Desgleichen können die Vorschubmittel ähnlich wie bei Bleistiftminenhaltern ausgebildet sein. Zweckmässigerweise wird das Magazin aus Kunststoff hergestellt mit einem Kopf und Spitze aus Metall. Dabei ist es auch möglich, den Handgriff mit den Vorschubmitteln mitsamt der darin befindlichen Stange aus Retentionsstiften für sich und hygienisch abgepackt anzufertigen und diesen an den Kopf zu befestigen, sei es durch Aufschrauben oder durch einen Bajonettverschluss oder dergleichen.

Die Retentionsstifte können aus Titan bestehen und werden, wie eingangs erwähnt, in die dafür vorgesehenen Bohrungen im Zahn eingeklebt, beispielsweise mittels eines schnell abbindenden Klebers wie Äthylcyanoacrylat oder dergleichen.

## Patentansprüche

1. Gerät mit einem Retentionsstifte (1) enthaltenden Magazin (4) zur Behandlung zerstörter Zähne, wobei die Stifte über eine als Einschnürung ausgebildete Sollbruchstelle (2) miteinander verbunden sind und das Magazin (4) als Handgriff (5) ausgebildet ist, in welchem Vorschubmittel angeordnet sind, um die zu einer Stange (3) zusammengefassten Retentionsstifte (1) zwecks Einkleben in eine Bohrung im Zahn vorwärtszubewegen, dadurch gekennzeichnet, dass sich an das Magazin ein Kopf (9) unter einem stumpfen Winkel anschliesst, der an seinem Ausgangsende ein federndes Mittel (10) zum Halten eines Retentionsstiftes (1) aufweist.

2. Gerät nach Anspruch 1, dadurch gekennzeichnet, dass das Mittel zum Halten des Retentionsstiftes eine dreieckige, offene Feder (10) enthält und der Kopf (9) zweiteilig ist.

3. Gerät nach Anspruch 1 oder 2, dadurch gekennzeichnet, dass die Vorschubmittel (6) einen den Handgriff (5) umfassenden Schieber (11) mit einem Federteil (12), der in Kerben (13) am Handgriff einrastbar ist, aufweisen, wobei der Schieber eine in einem Schlitz (14) im Handgriff (5) laufende Fahne (15) aufweist.

4. Gerät nach einem der Ansprüche 1 bis 3, dadurch gekennzeichnet, dass der Handgriff mit den Vorschubmitteln als auf den Kopf aufsteckbare Einheit ausgebildet ist.

5. Gerät nach Anspruch 1, dadurch gekennzeichnet, dass die Retentionsstifte (1) Längsriffelungen (8) aufweisen.

6. Gerät nach Anspruch 5, dadurch gekennzeichnet, dass die Retentionsstifte (1) aus Titan bestehen.

## Claims

1. A device with a magazine (4) for dental anchors (1) for the treatment of ruined teeth, the anchors being connected together by a predetermined break point (2) in form of a narrowing and the magazine (4) being formed as a handle (5), in which advancing means are arranged for advancing the anchors (1) arranged as a bar (3) for gluing them into a hole in a tooth, characterized in that a head (9) comprising at its outgoing extremity an elastic means (10) for holding an anchor (1), is connected to the magazine at an obtuse angle.

2. A device according to claim 1, characterized in that the means for holding the anchor comprises an open, triangular spring (10) and in that the head (9) is made in two parts.

3. A device according to claim 1 or 2, characterized in that the advancing means (6) comprise a slider (11) encompassing the handle (5) with an elastic part (12) capable to lock onto slots (13) of the handle, the slider comprising a lug (15) inserted in a slit (14) of the handle (5).

4. A device according to one of the claims 1 to 3, characterized in that the handle with the advancing means are made as a unit to be plugged onto the head.

5. A device according to claim 1, characterized in that the anchors are provided with longitudinal ribbings (8).

6. A device according to claim 5, characterized in that the anchors (1) are made of titanium.

## Revendications

1. Appareil avec magasin (4) pour tenons d'ancrage dentaire (1) pour le traitement de dents ruinées, les tenons étant liés entre eux par un endroit en forme de rétrécissement destiné à la rupture (2) et le magasin (4) étant formé comme poignée (5), dans lequel des moyens d'avance sont disposés pour avancer les tenons d'ancrage (1) groupés en barre (3) pour les coller dans un perçage de la dent, caractérisé en ce qu'une tête (9) comprenant à son extrémité de sortie un moyen élastique (10) pour tenir un tenon d'ancrage (1), se raccorde au magasin sous un angle obtus.

2. Appareil selon la revendication 1, caractérisé en ce que le moyen pour tenir le tenon d'ancrage contient un ressort triangulaire ouvert (10) et que la tête (9) est en deux parties.

3. Appareil selon la revendication 1 ou 2, caractérisé en ce que les moyens d'avance (6) comprennent un curseur (11) entourant la poignée (5) avec une partie élastique (12) susceptible de s'engager dans des encoches (13) de la poignée, le curseur comprenant une queue (15) insérée dans une fente (14) de la poignée (5).

4. Appareil selon l'une des revendications 1 à 3, caractérisé en ce que la poignée avec les moyens d'avance est en forme d'unité à fixer sur la tête.

5. Appareil selon la revendication 1, caractérisé en ce que les tenons d'ancrage comprennent des cannelures longitudinales (8).

6. Appareil selon la revendication 5, caractérisé en ce que les tenons d'ancrage sont en titane.

**FIG.1**

**FIG.2**

**FIG.3**

0 164 481

FIG.4

FIG.5

FIG.6

7

1

1

2

3

8

10

1

9

2

10

11

16

6

14

5

15

4

12

13

0 164 481